# EUROPEAN PATENT SPECIFICATION

(11) **EP 2 085 711 B1**
(45) Date of publication and mention of the grant of the patent: **31.12.2014**
(21) Application number: 09001191.7
(22) Date of filing: 28.01.2009
(51) Int. Cl.: F24F 13/22, F24F 6/00, C02F 1/50

(54) **Air conditioner having antibacterial unit for drain water**
Klimaanlage mit antibakterieller Einheit für Wasserabfluss
Climatiseur disposant d'une unité antibactérienne pour eau de drainage

(30) Priority: 29.01.2008 JP 2008017334; 27.03.2008 JP 2008084192
(43) Date of publication of application: 05.08.2009
(73) Proprietor: SANYO Electric Co., Ltd., Moriguchi-shi Osaka 570-8677 (JP)
(72) Inventor: Makino, Masazumi, Orga-gun Gunma 370-0511 (JP); Kobayashi, Kenji, Ota-shi Gunma 370-0311 (JP); Suzuki, Daisuke, Ota-shi Gunma 3773-0806 (JP); Koga, Seiichi, Ota-shi Gunma 373-0813 (JP); Ogura, Nobuhiro, Kiryau-shi Gunma 376-0034 (JP); Hayashi, Yoshikazu, Ora-gun Gunma 370-0533 (JP); Usui, Hiroaki, Ora-gun Gunma 370-0523 (JP)
(74) Representative: Glawe, Delfs, Moll

(56) References cited:
- EP-A- 1 835 236
- EP-A- 1 840 475
- JP-A- 2006 057 860
- KR-A- 20040 060 740

## Description

### BACKGROUND OF THE INVENTION

### 1.- Field of the Invention

The present invention relates to an air conditioner for discharging drain water stocked in a drain pan by a drain pump.

### 2. Description of the Related Art

There is generally known an air conditioner having a heat exchanger, a drain pan for receiving drain water dropped from the heat exchanger and a drain pump for pumping up and discharging drain water stocked in the drain pan. This type of air conditioner has a problem that semi-solid material (hereinafter referred to as "slime") occurs in drain water stocked in the drain pan and this slime clogs the drain pump or a drain hose.

In order to solve this problem, an air conditioner equipped with an antibacterial agent unit containing antibacterial agent for suppressing occurrence of slime has been proposed (for example, see JP-A-2006-194491, JP-A-2006-194493).

When the drain pump is driven and then it is stopped under the state that drain water is pumped up by the drain pump, the drain water being pumped drops by force of gravity and it is stocked in the ran pan. When the state that the drain water is stocked in the drain pan is continued, it easily falls into a slime occurrence state. Therefore, it is desired that an antibacterial component is sufficiently mixed in the drain water after the drain pump is stopped.

However, in the conventional air conditioner, an antibacterial agent unit is disposed to be far away from the drain pump, and thus it is difficult to mix the antibacterial component over the whole area of the drain water, so that the concentration of the antibacterial component is not uniform in the drawn water. Even if the antibacterial agent unit is merely disposed in the neighborhood of the drain pump, it is difficult to mix the antibacterial agent with the overall drain water dropping from the drain pump. Furthermore, in the conventional air conditioner, the antibacterial component is mixed with the drain water to chemically suppress occurrence of slime. Therefore, the antibacterial agent contained in the antibacterial agent unit is wasted, the antibacterial effect is lost, and thus it is difficult to keep the effect of suppressing occurrence of slime.

### SUMMARY OF THE INVENTION

Therefore, the present invention has an object to solve the above problem of the conventional air conditioner, and has an object to provide an air conditioner in which antibacterial component can be mixed with the overall drain water remaining after a drain pump is stopped, whereby occurrence of slime in drain water and a drain pan can be permanently suppressed.

In order to attain the above object, According to a first aspect of the present invention, an air conditioner having a heat exchanger (5, 116), a drain pan (7, 122) for receiving drain water generated in the heat exchanger and a drain pump (71, 112) for pumping up drain water stocked in the drain pan and discharging the drain water to the outside of the air conditioner, is characterized by further comprising an antibacterial agent unit (110) having a recess portion (90) located below a suction port (71A, 112A) of the drain pump, wherein the antibacterial agent unit is provided with a groove portion (91) around the recess portion, antibacterial agent being filled in the groove portion, a first opening portion (95) through which drain water dropping from the suction port of the drain pump into the recess portion is introduced into the groove portion, and a second opening portion (96) through which the drain water introduced into the groove portion is discharged to the outside of the antibacterial agent unit.

According to the first aspect of the present invention, the antibacterial component is mixed with the drain water dropped from the drain pump and then the drain water is spread to the drain pan, whereby the antibacterial component can be mixed over overall drain water.

In the above air conditioner, the first opening portion may be provided to a wall portion (94) of the groove portion through which the groove portion and the recess portion are partitioned, and the second opening portion may be provided to a lid portion (82) for covering the groove portion of the antibacterial agent unit, the antibacterial agent being filled between the wall portion and the lid portion.

In the above air conditioner, the drain water which drops from the drain pump and enters the recess portion can be surely brought into contact with the antibacterial agent in the drain water.

In the above air conditioner, the first opening portion may be provided to a wall portion (94) of the groove portion through which the groove portion and the recess portion are partitioned, and the second opening portion may be provided to an outer peripheral wall portion (97) of the antibacterial agent unit, the antibacterial agent being filled between the wall portion and the outer peripheral wall portion.

According to the above air conditioner, the drain water which drops from the drain pump and enters the recess portion can be surely brought into contact with the antibacterial agent in the drain water.

In the above air conditioner, the drain pan may be provided with a through hole (74) which is located below the suction port of the drain pump and through which drain water is discharged, and a stopper (75) that is engagedly fitted in the through hole, the antibacterial agent unit being integrally or separately disposed at an end portion of the stopper.

According to the above air conditioner, as compared with a case where this type of antibacterial agent unit is provide separately from the stopper, it is unnecessary to secure a mount space for the antibacterial agent unit.

In the above air conditioner, the stopper may have a grip portion 85 extending in a straight line and a recess portion 86 formed so as to surround the grip portion.

According to the above air conditioner, the antibacterial component can be mixed with the overall drain water remaining after the drain pump is stopped.

Preferably, the air conditioner further comprises an electrode type water level sensor (130) having electrodes for controlling the operation of the drain pump, wherein a metal body (150) having predetermined metal ion specifies having an antibacterial action, and a part of current flowing between the electrodes (131, 132, 133) through the drain water is made to flow between each of the electrodes and the metal body so that the metal ion specifies is eluted into the drain water.

According to the air conditioner of the second aspect of the present invention, the metal body having the predetermined metal ion specifies having the antibacterial action is disposed in the neighborhood of the electrodes of the water level sensor, and thus the metal ionization of the metal body is promoted, so that the metal ions are diffused into the drain water. Therefore, breeding of various kinds of bacteria in the drain water can be suppressed, and occurrence of slime in the drain water or the drain pan can be permanently suppressed.

In the above air conditioner, the water level sensor may have a common electrode and lower limit detection electrode and an upper limit detection electrode that are disposed so as to face the common electrode, and the metal body may be disposed below the common electrode and the lower limit detection electrode.

In the above air conditioner, the metal body may be disposed so that the distance between the metal body and the lower limit detection electrode is substantially equal to the distance between the lower limit detection electrode and the common electrode.

In the above air conditioner, the metal body may be formed of a material from which any one of silver ion, zinc ion and copper ion is eluted as the predetermined metal ion specifies.

### BRIEF DESCRIPTION OF THE DRAWINGS

Fig. 1 is diagram showing an air conditioner according to a first embodiment of the present invention;
Fig. 2 is an exploded perspective view showing the main body of an indoor unit;
Fig. 3 is an exploded perspective view showing the main body of the indoor unit and an air blower;
Fig. 4 is a cross-sectional view of a drain pump together with the peripheral construction thereof;
Fig. 5 is top and side views of a tap (stopper) provided to a drain pan;
Fig. 6 is a side cross-sectional view showing the tap together with the suction port of the drain pump;
Fig. 7 is a diagram showing an antibacterial agent unit according to a modification together with the peripheral construction thereof;
Fig. 8 is a side cross-sectional view of the antibacterial agent unit according to the modification;
Fig. 9 is a perspective view showing the antibacterial agent unit according to the modification;
Fig. 10 is a cross-sectional view showing an air conditioner according to a second embodiment of the present invention;
Fig. 11 is a bottom view of the air conditioner according to the second embodiment;
Fig. 12 is a diagram showing the arrangement of parts on the drain pan;
Fig. 13 is a diagram showing stream lines of current between electrodes;
Fig. 14 is a diagram showing the construction the arrangement relationship between the electrodes of a water level sensor and a silver body; and
Fig. 15 is a schematic diagram showing the reaction between the electrode and the silver body.

### DETAILED DESCRIPTION OF THE PREFERRED EMBODIMENTS

Preferred embodiments according to the present invention will be described hereunder with reference to the accompanying drawings.

Preferred embodiments according to the present invention will be described hereunder with reference to the accompanying drawings.

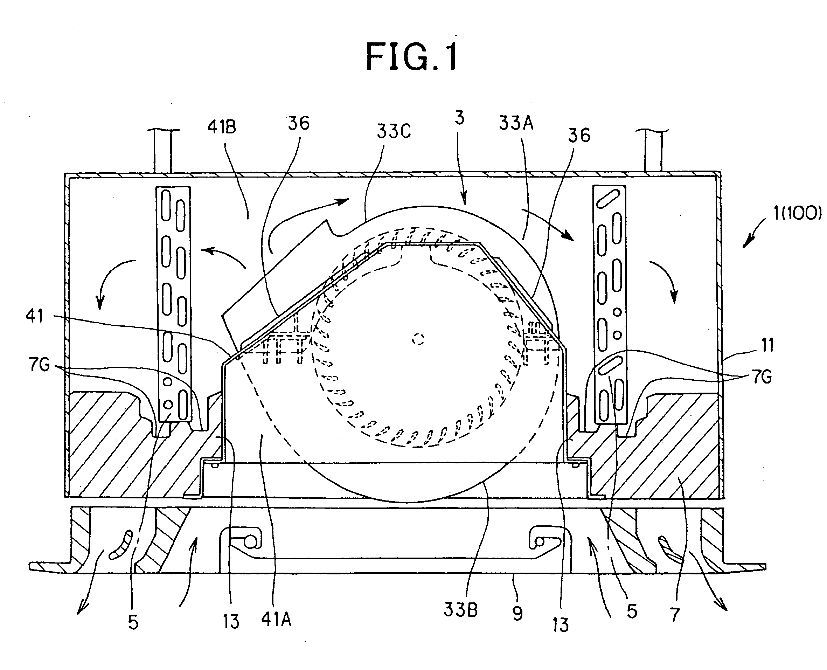

Fig. 1 is a diagram showing an air conditioner according to a first embodiment of the present invention. This air conditioner 100 is an in-ceiling mount type air conditioner having two air blow-out ports which is a so-called two-way cassette type, and it has a box-shaped indoor unit main body 1, and an outdoor unit (not shown) connected to the indoor unit main body 1 through pipes.

The indoor unit main body 1 is suspended from the ceiling through plural suspending bolts (not shown) while an air blower 3, a heat exchanger 5, a drain pan of foamed polystyrene and various kinds of equipment such as a drain pump, etc. described later are mounted in the indoor unit main body 1. A face panel 9 is superposed on and attached to the opening surface facing the lower side of the indoor unit main body.

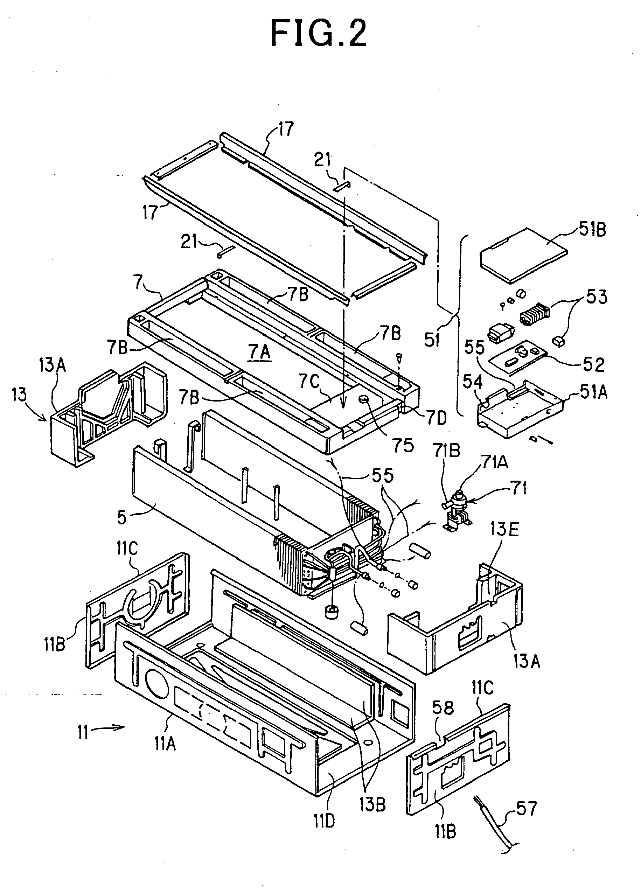

Fig. 2 is an exploded perspective view showing the indoor unit main body 1. The indoor unit main body 1 has an outer box (housing) 11 formed of a steel plate. This outer box 11 has a substantially U-shaped outer-box main body 1 and a pair of end plates 11B secured to both the ends of the outer-box main body 11A. A heat-insulating member 13 is disposed inside the outer box 11. The heat-insulating member 13 is constructed by a pair of end members formed of foamed polystyrene (inner foamed polystyrene) 13A disposed so as to face the respective end plates 11B, and joint members 13B of polyethylene through which the end members 13A are joined to each other.

The heat exchanger 5 which is designed in a substantially U-shape is disposed in the space surrounded by the heat-insulating member 13, and a drain pan 7 which is formed of foamed polystyrene and receives drain water generated in the heat exchanger 5 is disposed below the heat exchanger 5. The drain pan 7 is engagedly fitted in the opening of the lower surface of the outer box 1, and a large suction opening 7A is formed at the center of the drain pan 7, and a pair of slender air blow-out openings 7B are formed at both the sides of the opening 7A.

Reference numeral 17 represents enforcing clasps of steel plates. The enforcing clasps 17 are applied to the side edge portion of the suction opening 7 , and both the ends of the enforcing clasps 17 are fixed to the upper edge portion 11C of the end plates 11B of the outer box 11 through screws (not shown). The outer box 11 formed of steel plate is easily deformed and sags. Therefore, center clasps 21 are provided substantially at the center portion of the outer box 11 so as to be suspended between the outer wall of the outer box 11 and the enforcing clasp 17 of the drain pan 7, whereby the center claps 21 can prevent the top plate 11D of the outer box 11 from being warped and also prevent the center portion of the outer box 11 from being opened by the center clasps 21.

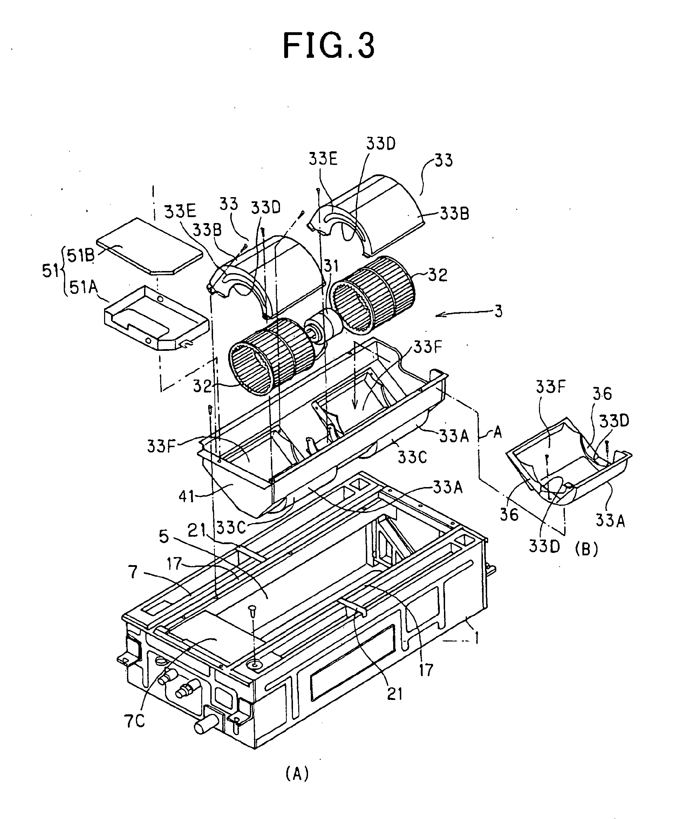

Fig. 3 is an exploded perspective view showing the indoor unit main body 1 together with the air blower 3. As shown in Fig. 3, the air blower 3 is installed into the space inside the substantially U-shaped heat exchanger 5 through the suction opening 7A of the drain pan 7. The air blower 3 is fixed to a partition plate 41 which is formed of a steel plate and designed in a box shape, and the partition plate 41 is fixed to the enforcing clasps 17 of the indoor unit main body 1 through plural screws. Specifically, the air blower 3 has a motor 31 disposed at the center portion thereof, and vane wheels are provided to the output shafts at both the sides of the motor 31. The vane wheel 32 is surrounded by a fan case 33, and the fan case 33 is divided into an upper case 33A and a lower case 33B at both the upper and lower sides.

Flanges 36 are formed at both the sides of the upper case 33A to be integral with the upper case 33A, and the upper case 33A is mounted in the opening of the partition plate 41 while a part 33C thereof is projected to the outside of the partition plate 41. The flange 36 is fixed to the partition plate 41 by penetrating a screw through the flange 36. As shown in Fig. 1 the partition plate 41 partitions the inside of the outer box 11 into upper and lower parts. A primary space 41A is formed at the lower side of the partition plate 41 and a secondary space 41B is formed at the upper side of the partition plate 41. The upper case 33A is fixed to the partition plate 41 through the flange 36, so that the strength of the partition plate 41 can be increased and also the sealing performance between the primary space 41A and the secondary space 41B can be enhanced.

With respect to the air blower 3, the air suction port is faced to the primary space 41A at the lower side of the partition plate 41, the air blow-out port is faced to the secondary space 41B at the upper side of the partition plate 41 and the part 33C of the fan case 33 which is located at the upper side of the flange 36 of the upper case 33A is faced to the secondary space 41B at the upper side of the partition plate 41. Therefore, by driving the air blower 3, indoor air is sucked into the primary space 41A through the suction opening 7A (see Fig. 2) of the drain pan 7 and then blown out into the secondary space 41B. The heat exchanger 5 disposed inside the outer box 11 is located in the secondary space 41B, and thus the indoor air is heat-exchanged by the heat exchanger 5, and the heat-exchanged air-conditioning air is blown into the room through a pair of slender blow-out openings 7B formed at both the sides of the suction opening 7A of the drain pan 7 to air-condition the room.

Under air-conditioning operation, drain water is generated in the heat exchanger 5, and the thus-generated drain water drops to a concaved groove portion (constituting a part of drain pool) 7G (see Fig. 1) which is located at the upper surface side of the drain pan 7 (in the downward direction of Fig. 2) and formed along the heat exchanger 5. The drain pan 7 is provided with a drain receiver 7C (see Fig. 2) which forms the lowest bottom portion of the drain pool (hereinafter referred to as "drain withdrawing portion" 7H) at one end side of the suction opening 7A, and all the drain water is withdrawn to the drain receiver 7C.

A drain pump 71 for pumping up drain water withdrawn by the drain receiver 7C and discharging the drain water to the outside is disposed at the upper side (in the downward direction of Fig. 2) of the drain receiver 7C.

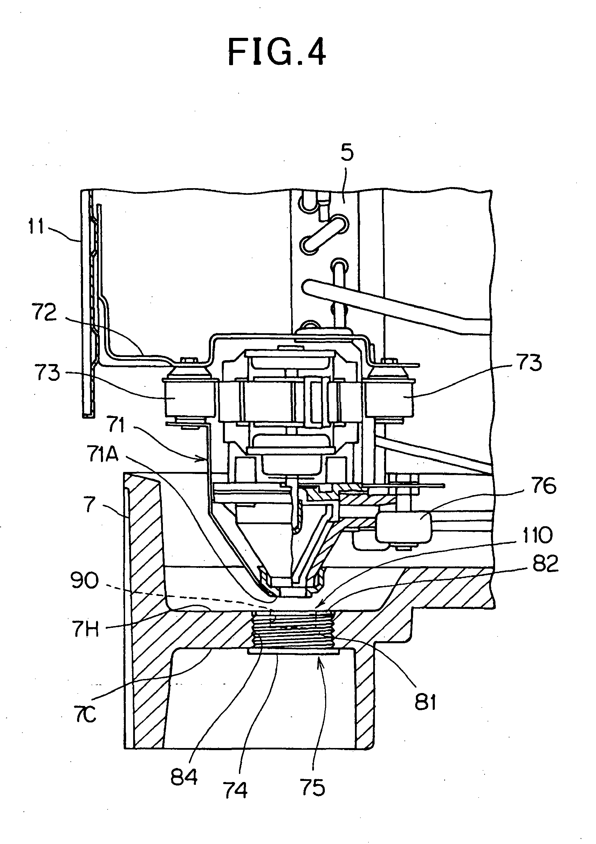

Fig. 4 is a cross-sectional view showing the drain pump 71 together with the peripheral construction thereof.

The drain pump 71 is fixed to the outer box 11 of the indoor unit main body 1 through a mounting stay so that the suction port 71A thereof faces the drain withdrawing portion 7H of the drain receiver 7C. Therefore, when the drain pump 71 is driven, drain water in the drain withdrawing portion 7H is sucked into the drain pump 71, and then discharged to the outside through a drain hose (not shown) joined to the discharge port 71B of the drain pump 71 (see Fig. 2). In this air conditioner 100, the drain pump 71 is driven during the air-conditioning operation, and the driving of the drain pump 71 is stopped when the air-conditioning operation is stopped.

Plural rubber cushions 73 are interposed between the drain pump 71 and the mounting stay 72. These rubber cushions 73 blocks transmission of vibration to the outer box 11 when the drain pump 71 is driven.

The drain withdrawing portion 7H is provided with a through-hole (internal thread hole) 74 for discharging drain water. This through-hole 7H is formed to be located just below the suction port 71A of the drain pump 71, and blocked off by a stopper. By detaching the stopper 75, the drain water stocked in the drain pan 7 can be discharged and also a cleaning work of the drain pan 7 can be performed. In Fig. 4, reference numeral 76 represents a float switch, and this float switch 76 is used to detect increase of the water level of drain water which is caused by breakdown of the drain pump 71, clogging of the drain hose or the like.

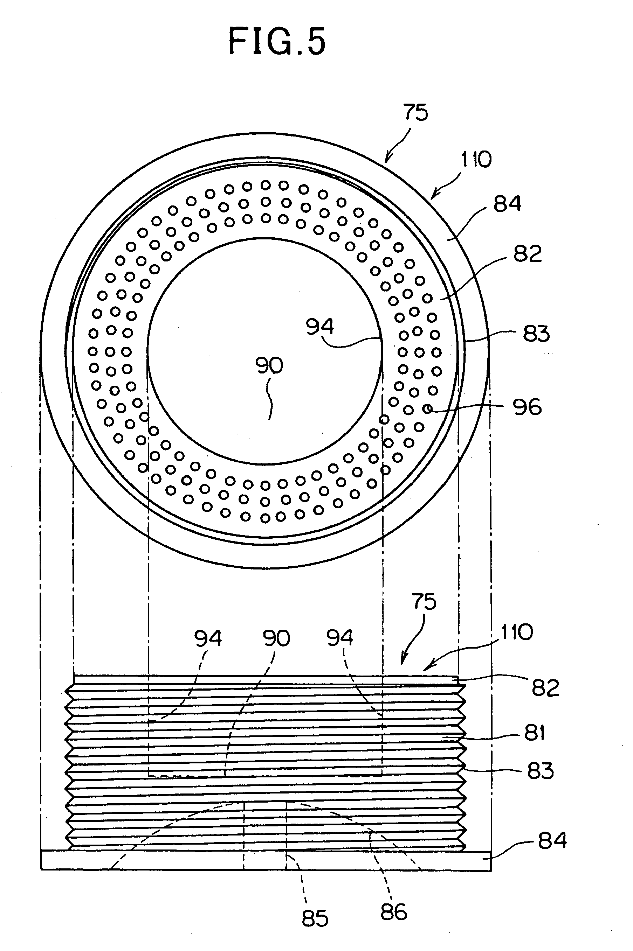

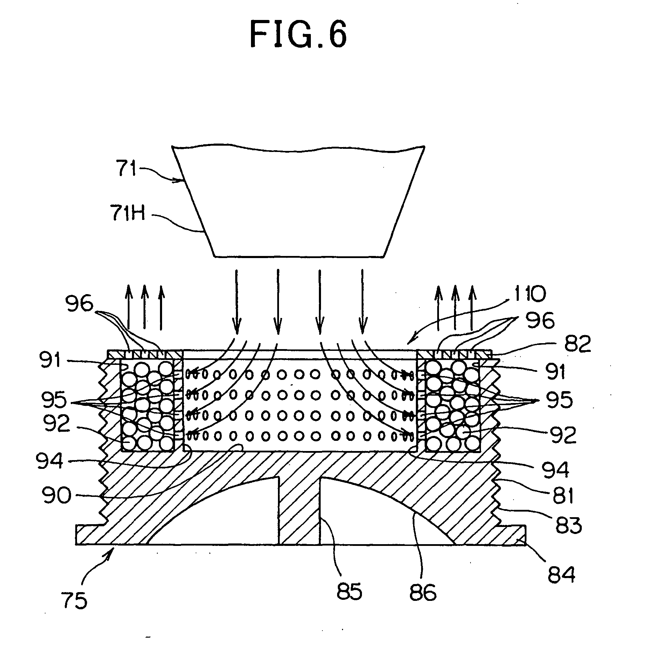

Fig. 5 is top and side views of the stopper 75, and Fig. 6 is a side cross-sectional view showing the stopper 75 together with the suction port 71A of the drain pump 71.

As shown in Figs. 5 and 6, the stopper 75 has a stopper main body 81 which is integrally formed of resin material, and a lid portion 82 which is provided to the tip portion (upper end portion) of the stopper main body 81 so as to be freely detachable from the stopper main body 81. The stopper main body 81 has a shaft portion 83 which is externally threaded as a male screw and fastened to the through-hole 74 as the female screw, and a flange portion 84 provided to the lower end portion of the shaft portion 83.

A recess (concave) portion 86 is formed at the lower portion of the stopper main body 81 (at the flange portion 84 side) so that a grip portion 85 extending in a straight line remains. A maintenance worker can easily manually rotate the stopper 75 by pinching the grip portion 85 without using any tool.

The flange portion 84 is formed to be larger in diameter than the through-hole 74. When the stopper 75 is fastened to the through-hole 74, the flange portion 84 abuts against the peripheral portion of the lower end of the through-hole 74 to position the stopper 75 to the fixing position. In this embodiment, the stopper 75 is positioned so that the upper end of the stopper 75 is located substantially at the same height as the bottom surface of the drain withdrawing portion 7H as shown in Fig. 4. In Figs. 5 and 6, the shape of the male screw of the shaft portion 83 is illustrated to be simplified.

As shown in Fig. 6, a recess portion 90 having a substantially cylindrical shape is formed at the upper portion of the shaft portion 83, and a groove portion 91 having an annular shape is formed so as to surround the recess portion 90. Furthermore, a lid portion 82 having an annular shape is secured to the groove portion 91 so as to cover the upper opening of the groove portion 91. That is, the tip portion of the stopper 75 is formed in a substantially donut shape to have a center hole, and the groove portion 91 blocked by the lid portion 82 functions as a container for accommodating silver ion antibacterial agent (hereinafter referred to as "antibacterial agent") 92 of relatively large granular materials (having spherical shapes in the example of Fig. 6).

This recess portion 90 is located so as to face the suction port 71A of the drain pump 71 when the stopper 75 is fixed to the through-hole 74, and formed to have substantially the same inner diameter as the suction port 71A. Furthermore, plural first opening holes (first opening portions) 95 are formed over the whole surface in a wall portion 94 which is annually erected around the recess portion 90 and arranged to be spaced from one another. In addition, plural second opening holes (second opening portions) 96 are formed over the whole surface in the lid portion 82 and arranged to be spaced from one another. Drain water freely flows in the groove portion 91 through the opening holes 95 and 96.

The opening holes 95 and 96 are formed to be smaller in diameter than the particle size of the granular antibacterial agent 92, and thus the antibacterial agent 92 can be prevented from leaking out from the inside of the groove portion 91 to the outside. The opening holes 95 and 96 may be arranged regularly or randomly.

The antibacterial agent 92 is slime occurrence preventing agent that comes into contact with drain water to mix fine powder of silver (antibacterial component) in drain water, thereby preventing occurrence of slime in the drain water. Here, the granular antibacterial agent 92 is used because gaps through which drain water flows are secured between the respective particles of the antibacterial agent 92 and thus the antibacterial component (fine powder of silver) can be easily mixed in the drain water even when antibacterial material 92 is fully filled in the groove portion 91. However, the antibacterial agent 92 is not limited to the silver ion antibacterial agent, and it may be another antibacterial agent insofar as it functions as slime occurrence preventing agent.

As described above, according to this embodiment, the recess portion 90 is formed at the upper portion of the stopper 75, the groove portion (container) 91 for holding the antibacterial agent 92 around the recess portion 90 is formed, and the opening holes 95, 96 are formed in the wall portion 94 of the recess portion 90 and the lid portion 82 covering the groove portion 91, thereby forming the antibacterial agent unit 110 for mixing the antibacterial agent 92 into drain water stocked in the drain pan 7.

Therefore, when the drain pump 71 is stopped from the state that it is driven to pump up drain water, drain water remaining in the drain pump 71 and the drain hose connected to the drain pump 71 drops from the suction port 71A, and enters the recess portion 90 at the upper portion of the stopper 75.

The flow of the drain water is indicated by a solid-line arrow in Fig. 6. The drain water entering the recess portion 90 changes its flow direction and flows to the erected wall portion 94 around the recess portion 90, and further flows through the first opening holes 95 formed in the wall portion 94. Thereafter, the drain water flows through the gaps between the particles of the antibacterial agent 92 in the groove portion 91 and through the second opening holes 96 formed in the lid portion 82, and then discharged to the outside.

Accordingly, drain water dropping from the suction port 71A of the drain pump 71 can be brought into contact with the antibacterial agent 92 in the groove portion 91 to mix the antibacterial component into the drain water, and then the drain water concerned can be spread to the drain pan 7. Accordingly, drain water remaining in the drain pan 7 is stirred by the drain water mixed with the antibacterial component, and thus the remaining drain water is fully mixed with the antibacterial component. As a result, unevenness of the concentration of the antibacterial component in the whole drain water can be reduced, and such a situation that slime occurs from a place at which the concentration of the antibacterial agent is lowered can be avoided, whereby occurrence of slime can be surely prevented.

Furthermore, according to this embodiment, the stopper 75 is fixed so that the upper end of the stopper 75 is set to substantially the same height as the bottom surface of the drain withdrawing portion 7H which is lowest in the drain pan 7 (see Fig. 4). Therefore, drain water enters the recess portion 90 of the stopper 75 even when the amount of the drain water is small insofar as the drain water is stocked in the drain pan 7, so that the drain water can be passed through the first opening holes 95 formed in the side wall 94 of the recess portion 90 and brought into contact with the antibacterial agent 92. Therefore, the occurrence of slime can be continually prevented irrespective of the amount of drain water.

As described above, according to this embodiment, the antibacterial agent unit 110 having the recess portion 90 is disposed at the lower side of the suction port 71A of the drain pump 71, and provided with the groove portion (container) 91 in which the antibacterial agent 92 is filled around the recess portion 90. Furthermore, the antibacterial gent unit 110 is provided with the first opening holes 95 for leading to the groove portion 91 drain water which drops from the suction port 71A and enters the recess portion 90 when the drain pump 71 is stopped, and the second opening holes 96 through which the drain water introduced into the groove portion 91 to the outside of the antibacterial agent unit 110. Therefore, the drain water dropping from the suction port 71A of the drain pump 71 can be mixed with the antibacterial component and diffused to the drain pan 7, whereby the antibacterial component can be sufficiently mixed in the whole drain water.

Furthermore, according to the construction of this embodiment, the antibacterial agent unit 110 is formed integrally with the stopper 75. Therefore, as compared with the construction that this type of antibacterial agent unit is formed separately from the stopper 75, it is unnecessary to secure the mount space of the antibacterial agent unit separately from the stopper, so that the antibacterial agent unit 11 can be easily mounted.

In this construction, the groove portion 91 in which the antibacterial agent 92 is mounted around the recess portion 90 is formed. Therefore, as compared with a case where this type of antibacterial unit is designed so that the center portion thereof is projected and the antibacterial agent 92 is filled in the center portion, the filling space of the antibacterial agent 92 can be more broadly secured, and the exchange interval of the antibacterial agent 92 can be increased.

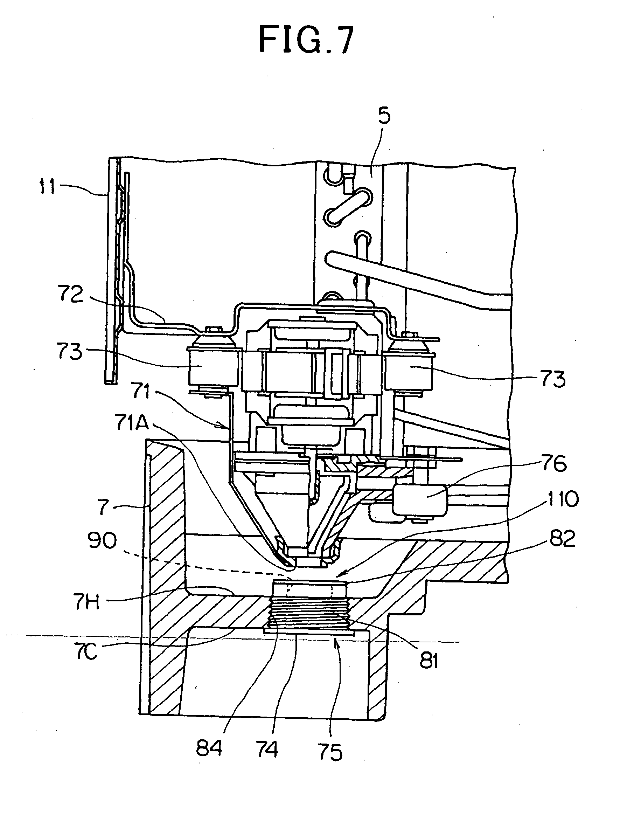

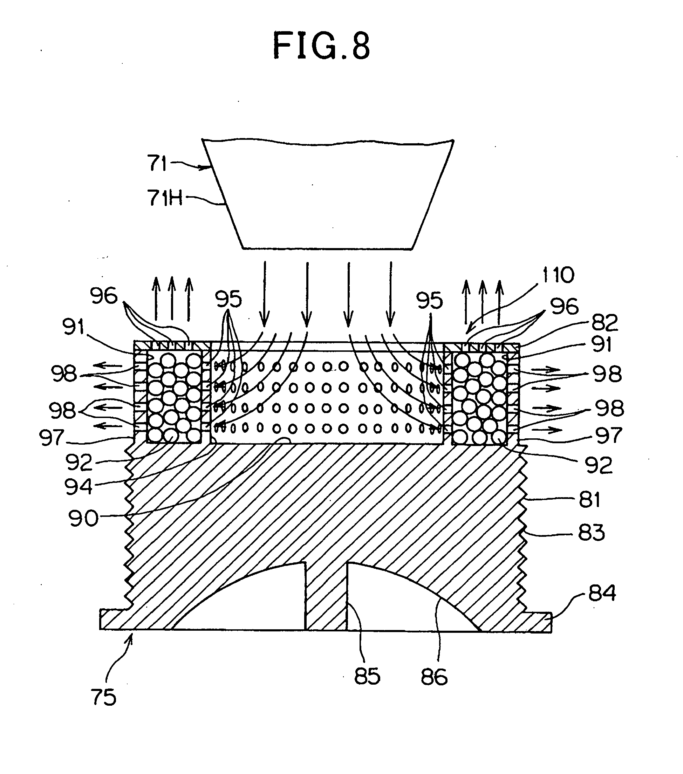

The present invention is not limited to the above embodiment. For example, in the above embodiment, the antibacterial agent unit 110 is mounted substantially at the same height as the bottom surface of the drain withdrawing portion 7H. However, as shown in Fig. 7, the antibacterial agent unit 110 may be projected upwardly from the bottom surface of the drain withdrawing portion 7H. In this case, as shown in Fig. 8, plural third opening holes (third opening portions) intercommunicating with the groove portion 91 may be provided in the outer peripheral wall portion 97 of the antibacterial agent unit 110. According to this construction, drain water dropping from the suction port 71A of the drain pump 71 enters the groove portion 91 through the first opening holes 95 formed in the wall portion 94 of the recess portion 94, and then it can be discharged not only through the second opening holes 96 of the lid portion 82, but also through the third opening holes 98 of the outer peripheral wall portion 97, so that the drain water can be made to more easily flow through the groove portion 91.

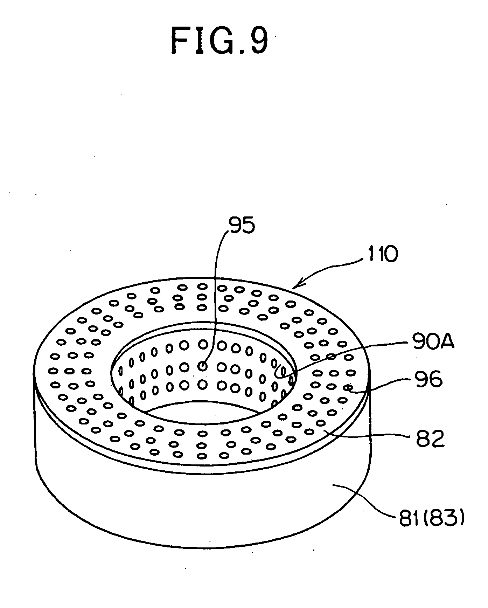

Furthermore, in the above embodiment, the antibacterial agent unit 110 is formed in the stopper 75 which is mounted in the drain pan 7. However, the present invention is not limited to this style, and the antibacterial agent unit 110 may be formed separately from the stopper 75 as shown in Fig. 9. In the example of Fig. 9, the antibacterial agent unit 110 is designed in a cylindrical shape to have a through-hole 90A (corresponding to the recess portion 90) at the center thereof. The antibacterial agent unit 110 is disposed so that the through-hole 90A is located below the suction port 71A of the drain pump 71. According to this construction, the antibacterial component can be mixed and diffused in drain water dropping from the suction port 71A of the drain pump 71, whereby the antibacterial component can be sufficiently mixed in the overall drain water as in the case of the above embodiment.

The outer shape of the antibacterial agent unit 110 is not limited to the cylindrical shape, and various shapes such as a prismatic shape, etc. may be applied.

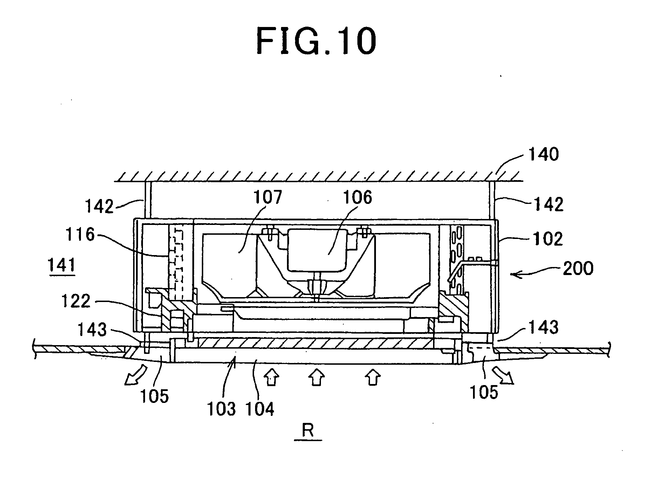

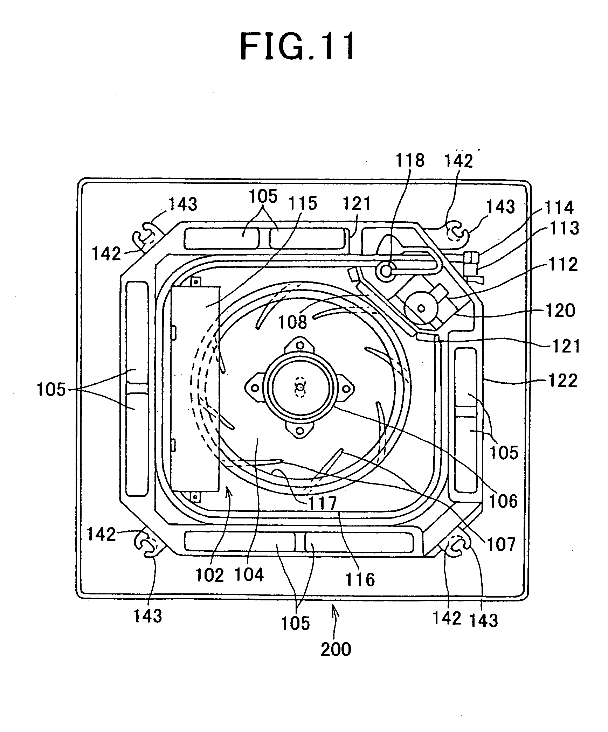

Next, Fig. 10 is a diagram showing an air conditioner according to a second embodiment of the present invention, and more specifically Fig. 10 is a cross-sectional view showing the main body of the air conditioner and a face panel. Fig. 11 is a bottom diagram showing the main body of the air conditioner.

In Figs. 10 and 11, reference numeral 200 represents the air conditioner of this embodiment. The air conditioner 200 has a refrigeration cycle constructed by a compressor, an outdoor heat exchanger, etc. in combination with an outdoor unit *not shown (, and the air conditioner 200 is suspended in the ceiling space 141 of a building 140 as shown in Fig. 10. The air conditioner shown in Figs. 10 and 11 is an example of a four-way in-ceiling cassette type air conditioner, and it has an air conditioner main body 102 and a face panel 103. An air suction port 104 is formed at the center of the face panel 103, and air blow-out ports 105 are formed around the air suction port 104 of the face panel 103. Four bolts 142 are set to extend vertically and downwardly from the building 140, and the four bolts 142 are fixed to respective lifting lugs 143 of the air conditioner main body 102.

In the air conditioner main body 102 are disposed a fan motor 106, an indoor fan 107 (turbo fan), a partition plate 108, a drain pump 112, a drain discharge port 113, a refrigerant pipe 114, an electrical component box 115 having controllers such as a drain pump controller, etc., a heat exchanger 116, etc. Furthermore, a drain pan 122 for receiving drain water dropping from the heat exchanger 116 is disposed at the lower side of the heat exchanger 116.

The indoor fan 107 is disposed to face the fan nozzle 117. The heat exchanger 116 is bent in a substantially rectangular shape, and disposed to be near to the air blow-out ports 105 at the four sides and surround the indoor fan 107. The partition plate 108 connects pipe plates 121 of the heat exchanger 116, and a drain pump 112, a drain discharge port 113, an indoor mechanical valve 118, etc. are mounted in a space 120 at the outside of the heat exchanger 116 which is partitioned by the partition plate 108. under operation, the partition plate 108 prevents leakage of air flowing from the indoor fan 107 , and existence of the partition plate 108 enables heat-exchanged air from the four air blow-out ports 105 from being surely blown into the room R.

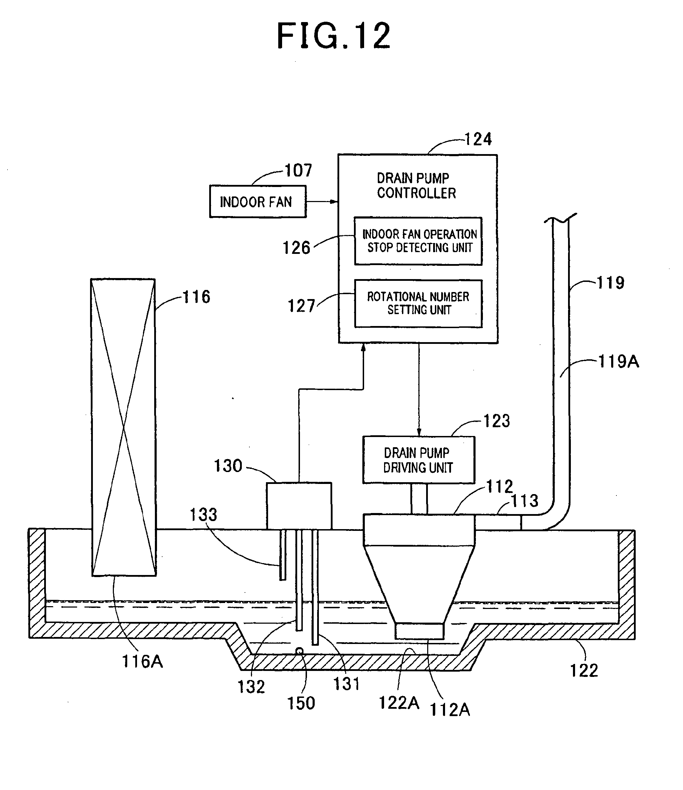

Fig. 12 is a diagram showing the drain pan 122 of this embodiment.

In Fig. 12, the drain pan 122 is provided at the lower side of the heat exchanger 116. A drain pool 122A is formed at the bottom portion of the drain pan 122 so as to be lower in height than the bottom portion of the drain pan 122 by one step, and drain water dropped onto the drain pan 122 flows into the drain pool 122A. Furthermore, a water level sensor 130 as a water level detecting unit for detecting the water level of the drain water and the drain pump 112 are disposed at the drain pool 122A. A drain pump driving unit 123 such as a DC motor or the like is connected to the drain pump 112, and further a drain pump controller 124 for controlling start/stop of the drain pump 112 and control the rotational number of the drain pump 112 is connected to the drain pump driving unit 123. The drain pump controller 124 operates the drain pump 112 on the basis of the water level detected by the water level sensor 130.

Specifically, the water level sensor 130 has a common electrode 131, and a lower limit detection electrode 132 and an upper limit detection electrode 133 which are disposed to face the common electrode 131. The pump controller 124 drives the drain pump 112 when the water level of drain water increases to the position of the upper limit detection electrode 133, and stops the drain pump 112 when the water level decreases to a position lower than the lower end 132A (Fig. 5) of the lower limit detection electrode 132.

A voltage is applied between the common electrode 131 and each of the lower limit detection electrode 132 and the upper limit detection electrode 133, and when drain water exists between the common electrode 131 and the lower limit detection electrode 132 or the upper limit detection electrode 133, predetermined current (for example, 50mA) flows through the drain water. Accordingly, existence of drain water is judged by detecting the current concerned. On the other hand, if no predetermined current flows, non-existence of drain water is judged. In this embodiment, the common electrode 131 is disposed to extend to the neighborhood of the bottom surface of the drain pool 22A, the lower limit detection electrode 132 is disposed to extend to substantially the same height position as the suction port 112A of the drain pump 112 and the upper limit detection electrode 133 is disposed to extend to a position lower than the bottom surface 16A of the heat exchanger 16. Accordingly, when the water level is lowered to a position at which drain water cannot be discharged by the drain pump 112, the drain pump 112 is immediately stopped to prevent idling of the drain pump 112, and when the water level is approximate to the bottom surface 16A of the heat exchanger 116, the drain pump 112 is operated to prevent th4 heat exchanger 116 from being immersed in the drain water.

Furthermore, the drain pump controller 124 has an indoor fan operation stop detecting unit 126 (hereinafter merely referred to as "fan operation detecting unit") for detecting whether the indoor fan 107 is operated or not, and a rotational number setting unit 127 for setting the rotational number of the drain pump 112.

During the drain pump 112, when the fan operation detecting unit 126 detects that the drain pump 112 is under operation, the rotational number setting unit 127 sets the rotational number of the drain pump 112 to the maximum rotational number and outputs the set rotational number to the drain pump driving unit 123. After the fan operation detecting unit 126 detects the stop of the indoor fan 107, the drain-dischargeable minimum rotational number is output to the drain pump driving unit 123. The drain pump driving unit 123 operates the drain pump 112 at the rotational number output from the rotational number setting unit 127.

Furthermore, a drain hose 119 for discharging drain water to the outside of the air conditioner is connected to the drain discharge port 113 of the drain pump 112. The drain hose 119 has a rising portion 119A extending upwardly, and when the operation of the drain pump 112 is stopped, the drain water remaining in the rising portion 119A is returned onto the drain pan 122. Therefore, the common electrode 131 and the lower limit detection electrode 132 of the water level sensor 130 are immersed in the drain water by the return water even after the operation of the drain pump 112 is stopped, so that current flows between the electrodes concerned.

As described above, when the operation of the drain pump 112 is stopped, the drain water remaining in the rising portion 119A of the drain hose 119 is returned to the drain pan 122 by its own weight. Therefore, even when the suction port 112A of the drain pump 112 is provided to be near to the bottom surface of the drain pool 122A, it is impossible to discharge all the drain water on the drain pan 122, and thus the drain water is kept to be trapped in the drain pan 122 after cooling operation. When drain water is stocked for a long time in the drain pan 122, various bacteria in the drain water breed, so that slime may occur. Therefore, there is a risk that this slime clogs he drain pump 112, the drain hose 119 or the like.

According to this embodiment, in order to prevent occurrence of slime, a silver (Ag) body 150 as a metal body containing silver ions (Ag⁺) as predetermined metal ion species having antibacterial action is disposed in the neighborhood of the position below the water level sensor 130in the drain pool 122A of the drain pan 122 as shown in Fig. 12.

When the silver body 150 is disposed in water, the surface of the silver body 150 is oxidized and ionized by oxygen molecules (O₂) in the water to form silver ions, and the silver ions are diffused in the water. However, silver has a relatively low ionization tendency, and thus when it is merely disposed in water, it is difficult to generate water containing silver ions of a sufficiently high concentration (for example, 50ppm) to suppress occurrence of slime in short time. Therefore, the silver body 150 is disposed in the neighborhood of the position below the water level sensor 130, whereby a part of current flowing between the electrodes of the water level sensor 130 flows in the silver body 150 to promote oxidation reaction on the surface of the silver body 150, and a large amount of silver ion is diffused into water.

Particularly, drain water is not newly generated during a period for which the air conditioner 200 is stopped like nighttime or the like, and thus there is no case where the drain pump 112 is operated and drain water is discharged to the outside of the air conditioner. Accordingly, a part of current flowing between the electrodes of the water level sensor 130 flows through the silver body 150 during this period for which the air conditioner is stopped, and thus a large amount of silver ion elutes into drain water from the silver body 150, so that water containing silver ion whose concentration is enough to suppress occurrence of slime is generated. In this case, the water level sensor 130 also functions as a silver ion generating unit.

Next, the arrangement construction of the silver body 150 will be described.

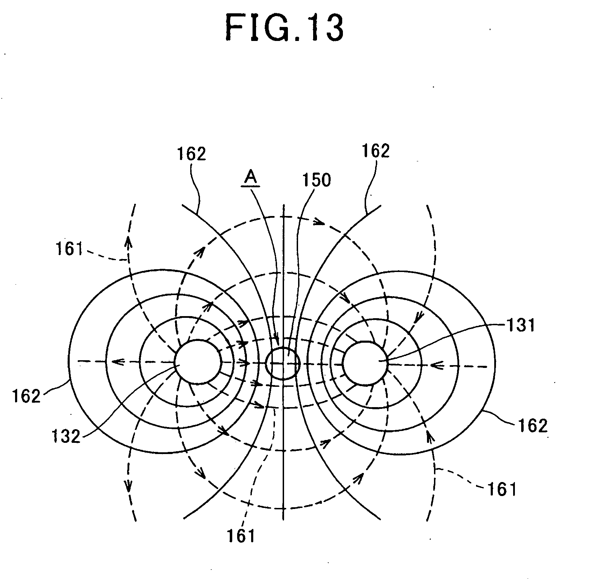

When the common electrode 131 and the lower limit detection electrode 132 are immersed in drain water, as indicated by a broken line in Fig. 13, current flows along stream lines 161 of current from the lower limit detection electrode 132 to the common electrode 131. Furthermore, reference numeral 162 represents isoelectric lines provided around the common electrode 131 and the lower limit detection electrode 132 in Fig. 13.

The amount of silver ion obtained by ionizing the silver body 150 into silver ion is dependent on the amount of current flowing through the silver body 150. Therefore, from the viewpoint of promoting a large amount of silver ionization, it is desired to locate the silver body 150 at a position A at which the density of the stream lines 161 of current is high (for example, at the intermediate position between the common electrode 131 and the lower limit detection electrode 132). On the other hand, the water level sensor 130 originally detects the water level of drain water, and it must be avoided that the arrangement of the silver body 150 between the common electrode 131 and the lower limit detection electrode 132 disturbs the function of detecting the water level.

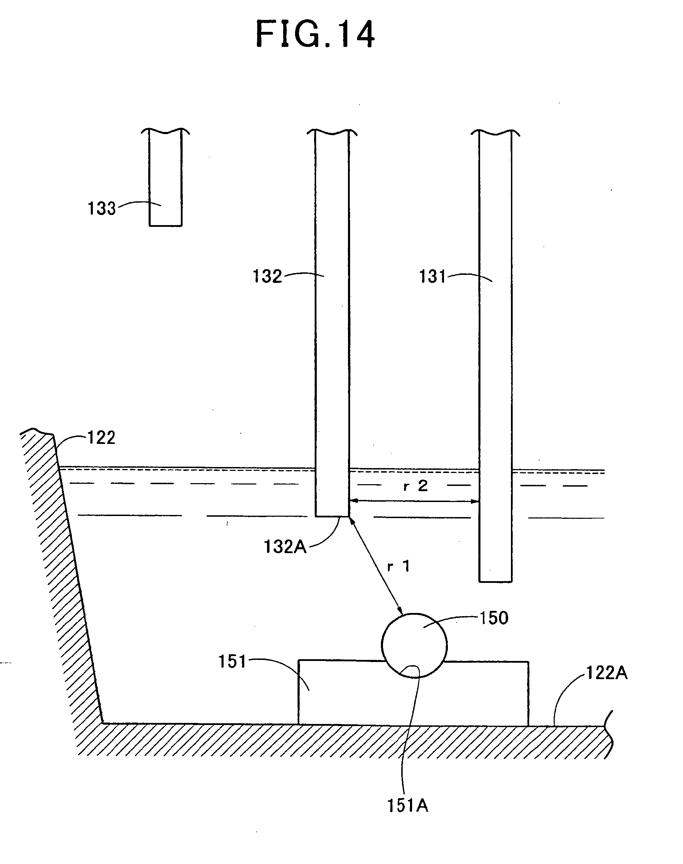

Therefore, according to this embodiment, the silver body 150 is disposed between the common electrode 131 and the lower limit detection electrode 132 and also in the neighborhood of the positions below the common electrode 131 and the lower limit detection electrode 132 as shown in Fig. 14. Here, the common electrode 131 and the lower limit detection electrode 132 are immersed in drain water by return water even after the operation of the drain pump 112 is stopped, and thus these electrodes are in contact with drain water for a long time. Furthermore, current flows between the electrodes concerned through the drain water while the electrodes are in contact with the drain water. Therefore, by disposing the silver body 150 in the neighborhood of the positions below the common electrode 131 and the lower limit detection electrode 132 and between the common electrode 131 and the lower limit detection electrode 132, a part of current flowing between the common electrode 131 and the lower limit detection electrode 132 flows through the silver body 150 over a long time, so that ionization of silver can be promoted. Furthermore, when the water level of the drain water is lowered to a position lower than the lower end 132A of the lower limit detection current 132, no current flows between the electrodes and through the silver body 150, and thus the silver ionization of the silver body 150 is stopped. Accordingly, when no water exists on the drain pan 122, the silver ionization is suppressed and thus the lifetime of the silver body 150 can be expected to be lengthened.

Furthermore, the silver body 150 is disposed on a pedestal which is disposed on the bottom surface of the drain pool 122A so that the distance r1 from the lower limit detecting electrode 132 to the silver body 150 is substantially equal to the distance r2 from the lower limit detection electrode 132 to the common electrode 131. The pedestal 151 has a recess portion 151A in which the silver body 150 is engagedly fitted so as to prevent the silver body 150 from being moved by the flow of the drain water.

Accordingly, the distance from the lower limit detection electrode 132 to the silver body 150 and the distance from the lower limit detection electrode 132 to the common electrode 131 can be kept to be substantially equal to each other. Therefore, current can be made to substantially equally flow from the lower limit detection electrode 132 to the silver body 150 and from the lower limit detection electrode 132 to the common electrode 131, silver ions having the antibacterial action can be generated and also the drain pump 112 can be normally operated.

The silver body 150 brings about an oxidation reaction more easily and silver ionization occurs more easily as the contact area thereof with water is larger. Therefore, in this embodiment, in order to increase the contact area, it is desired that silver thread is rolled up like cotton to form the silver body 150.

Next, the reaction mechanism for generating silver ion water will be described.

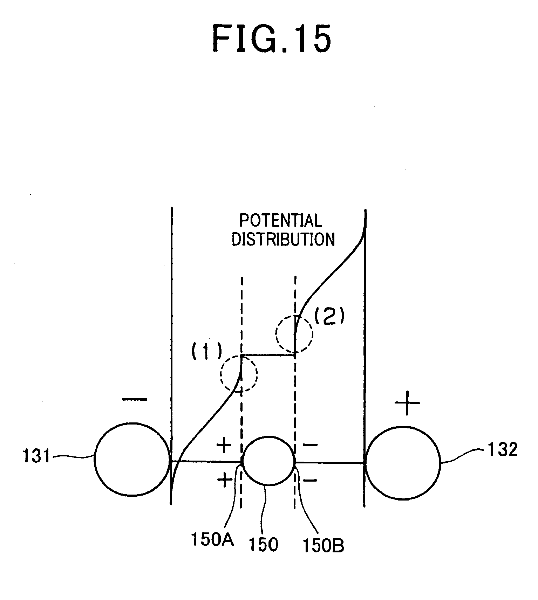

Fig. 15 is a schematic diagram showing the reaction between the electrode and the silver body.

When the silver body 150 is disposed between the common electrode 131 and the lower limit detection electrode 132, the surface of the silver body 150 is polarized into an anode portion 150A and a cathode portion 150B by current flowing from the lower limit detection electrode 132 to the common electrode 131. At this time, the reaction of (1) occurs at the anode portion 150A of the silver body 150 and the reaction of (2) occurs at the cathode portion 150B, so that silver ions are eluted from the anode portion 150A of the silver body 150.
(1) 2Ag → 2Ag⁺ + 2e⁻
(2) 1/2O₂ + H₂O + 2e⁻ → 2OH⁻ 2H⁺ + 2e⁻ → H₂
   As described above, at the anode portion 150A of the silver body 150, the silver body 150 is ionized into silver ions, and the generated silver ions are diffused into drain water. Accordingly, occurrence of slime in the drain water and on the drain pan 122 can be prevented.

Next, the operation of the drain pump controller 124 will be described.

When the cooling operation of the air conditioner 200 is started, the compressor and the indoor fan 107 starts to operate. When the indoor fan 107 starts to operate, the fan operation detecting unit 126 of the drain pump controller 124 detects that the indoor fan 107 is under operation, and the rotational number setting unit 127 sets the rotational number of the drain pump 112 to the maximum rotational number.

The drain pump controller 124 controls the operation of the drain pump 112 on the basis of the detection result of the water level sensor 130. That is, when the water level of the drain water increases to the position of the upper limit detection electrode 133, the drain pump controller 124 operates the drain pump 112 so that the drain pump driving unit 123 has the maximum rotational number. When the drain pump 112 operates, drain water stocked in the drain pan 122 is pumped up and discharged through the drain hose 119 to the outside of the air conditioner.

Furthermore, when the cooling operation is stopped during operation of the drain pump 112 and the compressor and the indoor fan 107 stop the operation, the fan operation detecting unit 126 detects the stop of the operation of the indoor fan 107. When the indoor fan 107 is stopped, the rotational number setting unit 127 sets the rotational number of the drain pump driving unit 123 to the minimum rotational number at which the drain water can be discharged, and the drain pump driving unit 123 operates the drain pump 112 at this rotational number. As described above, the drain pump 112 operates at the minimum rotational number at which the drain water can be discharged, whereby webbing noise of the drain pump 112 or the like can be minimized. In addition, even after the compressor and the indoor fan 107 are stopped, drain water which adheres to the heat exchanger 116, etc., drops from the heat exchanger 116, etc. and then stays on the drain pan 122 can be discharged to the outside of the air conditioner.

When the water level of the drain water is lowered to the position of the lower limit detection electrode 132, the drain pump 112 cannot pump up the drain water. Therefore, the drain pump controller 124 stops the drain pump driving unit 123 and thus the drain pump 112 stops the operation.

During the period when the drain pump 112 stops the operation, drain water is stocked on the drain pan 122, and thus a part of current flowing between the electrodes of the water level sensor 130 flows through the silver body 150, so that lots of silver ions are eluted from the silver body 150 into the drain water. Accordingly, water containing silver ions whose concentration is enough to suppress occurrence of slime is generated.

In this case, the concentration of silver ion is higher around the silver body 150, and lower as the position is farther from the silver body 150. Therefore, it is desired that the silver ion concentration is made uniform by periodically moving drain water.

Specifically, the drain pump controller 124 operates the drain pump 112 irrespective of the detection result of the water level sensor when the air conditioner 200 is stopped and the time corresponds to a midnight time zone (for example, 0 o'clock to 5 o'clock).

In this case, the pump-up drain water is not discharged over the rising portion 119A of the drain hose 119, and it is returned onto the drain pan 122 again simultaneously with the stop of the drain pump 112. Therefore, the drain water is stirred by the return water, whereby silver ions are uniformly diffused onto the drain pan 122. In this embodiment, the drain pump controller 124, the drain pump driving unit 123 and the drain pump 112 function as a diffusing unit.

As described above, according to this embodiment, the air conditioner is provided with the heat exchanger 116, the drain pan 122 for receiving drain water dropping from the heat exchanger 116, and the drain pump 112 for pumping up drain water stocked in the drain pan 122 and discharging the drain water, and also provided with the electrode type water level sensor 130 for controlling the operation of the drain pump 112. Furthermore, the silver body 150 containing silver ions having the antibacterial action is disposed in the neighborhood of the electrodes of the water level sensor 130. Therefore, a part of current flowing between the electrodes through drain water flows between each electrode and the silver body 150, whereby elution of silver ions into the drain water is promoted and the silver ions are diffused into the drain water. Therefore, breeding of various bacteria in the drain water can be suppressed and occurrence of slime in drain water and on the drain pan 122 can be permanently suppressed by a simple construction that the silver body 150 is disposed in the neighborhood of the electrodes of the water level sensor 130. Furthermore, drain water having the antibacterial action is discharged by the operation of the drain pump 112. However, drain water passes through the drain hose 119, whereby occurrence of slime in the drain hose 119 can be permanently suppressed. Accordingly, maintenance free of the drain pan 122 can be attained.

Accordingly, in the air conditioner of this embodiment, the trouble of the drain system can be reduced, and the maintenance can be made easy. In addition, the inside of the air conditioner is cleaned, and thus this embodiment contributes to implementation of a more comfortable air-conditioning environment. Accordingly, the air conditioner of this embodiment is more effective to a case where it is disposed a building in which unspecific many persons gather such a school, a hospital, a convenience store or the like.

Furthermore, in this embodiment, the common electrode 131 and the lower limit detection electrode 132 are in contact with drain water for a long time, and current flows between the electrodes through the drain water while the electrodes are in contact with the drain water. Therefore, the silver body 150 is disposed at the lower side of the common electrode 131 and the lower limit detection electrode 132, whereby a part of current flowing between the common electrode 131 and the lower limit detection electrode 132 flows through the silver body 150 over a long time, so that silver ionization can be promoted.

Furthermore, according to this embodiment, the silver body 150 is disposed so that the distance r1 between the silver body 150 and the lower limit detection electrode 132 is substantially equal to the distance r2 between the lower limit detection electrode 132 and the common electrode 131, so that uniform current can be made to flow from the lower limit detection electrode 132 to the silver body 150 and from the lower limit detection electrode 132 to the common electrode 131. Therefore, silver ions having the antibacterial action can be generated, and the drain pump 112 can be normally operated.

The present invention is not limited to the above embodiment, and various modifications and alterations can be made without departing from the subject matter of the present invention. For example, in this embodiment, the silver body 150 is disposed as a metal body. However, a copper (Cu) or zinc (Zn) body may be disposed insofar as it has an antibacterial action. Here, it is known that silver ion has a stronger antibacterial action than copper ion (Cu²⁺) by about 40 times and zinc ion (Zn²⁺) by about 10, 000 times. Therefore, it is more effective to provide the silver body.

Still furthermore, according to this embodiment, the water level detection based on the water level sensor 130 is executed at all times. However, the water level detection may be executed every predetermined time. According to this construction, the elution amount of silver ion can be controlled while detecting the water level, and the lifetime of the silver body 150 can be increased.

According to this embodiment, the silver body 150 is disposed at the intermediate position between the common electrode 131 and the lower limit detection electrode 132, that is, at a position A where the density of the flow streams 161 of current is high. However, the silver body 150 may be disposed at any position insofar as the position is within the stream lines 161 of the current.

## Claims

1. An air conditioner having a heat exchanger (5, 116), a drain pan (7, 122) for receiving drain water generated in the heat exchanger and a drain pump (71, 112) for pumping up drain water stocked in the drain pan and discharging the drain water to the outside of the air conditioner, **characterized by** further comprising an antibacterial agent unit (110) having a recess portion (90) located below a suction port (71A, 112A) of the drain pump, wherein the antibacterial agent unit is provided with a groove portion (91) around the recess portion, antibacterial agent being filled in the groove portion, a first opening portion (95) through which drain water dropping from the suction port of the drain pump into the recess portion is introduced into the groove portion, and a second opening portion (96, 98) through which the drain water introduced into the groove portion is discharged to the outside of the antibacterial agent unit.

2. The air conditioner according to claim 1, wherein the first opening portion is provided to a wall portion (94) of the groove portion through which the groove portion and the recess portion are partitioned, and the second opening (96) portion is provided to a lid portion (82) for covering the groove portion of the antibacterial agent unit, the antibacterial agent being filled between the wall portion and the lid portion.

3. The air conditioner according to claim 1, wherein the first opening portion is provided to a wall portion (94) of the groove portion through which the groove portion and the recess portion are partitioned, and the second opening (98) portion is provided to an outer peripheral wall portion (97) of the antibacterial agent unit, the antibacterial agent being filled between the wall portion and the outer peripheral wall portion.

4. The air conditioner according to claim 1, wherein the drain pan is provided with a through hole (74) which is located below the suction port of the drain pump and through which drain water is discharged, and a stopper (75) that is engagedly fitted in the through hole, the antibacterial agent unit being integrally provided to an end portion of the stopper.

5. The air conditioner according to claim 1, wherein the drain pan is provided with a through hole (74) which is located below the suction port of the drain pump and through which drain water is discharged, and a stopper (75) that is engagedly fitted in the through hole, the antibacterial agent unit being separately provided to an end portion of the stopper.

6. The air conditioner according to claim 5, wherein the stopper has a grip portion (85) extending in a straight line and a recess portion (86) formed so as to surround the grip portion.

7. The air conditioner according to claim 1, wherein the antibacterial agent is granular silver ion antibacterial agent.

8. The air conditioner according to any of the preceding claims, **characterized by** further comprising an electrode type water level sensor (130) having electrodes for controlling the operation of the drain pump, wherein a metal body (150) having predetermined metal ion specifies having an antibacterial action, and a part of current flowing between the electrodes (131, 132, 133) through the drain water is made to flow between each of the electrodes and the metal body so that the metal ion specifies is eluted into the drain water.

9. The air conditioner according to claim 8, wherein the water level sensor (130) has a common electrode (131) and lower limit detection electrode (132) and an upper limit detection electrode (133) that are disposed so as to face the common electrode (131), and the metal body (150) is disposed below the common electrode (131) and the lower limit detection electrode (132).

10. The air conditioner according to claim 9, wherein the metal body (150) is disposed so that the distance between the metal body (150) and the lower limit detection electrode (132) is substantially equal to the distance between the lower limit detection electrode (132) and the common electrode (131).

11. The air conditioner according to claim 8, wherein the metal body (150) is formed of a material from which any one of silver ion, zinc ion and copper ion is eluted as the predetermined metal ion specifies.

## Patentansprüche

1. Klimaanlage mit einem Wärmetauscher (5, 116), einer Ablaufwanne (7, 122) zum Aufnehmen von in dem Wärmetauscher erzeugtem Abwasser und einer Ablaufpumpe (71, 112) zum Hochpumpen von in der Ablaufwanne gelagertem Wasser und Ablassen des Abwassers aus der Klimaanlage, **gekennzeichnet durch** Umfassen von weiterhin einer Einheit (110) für einen antibakteriellen Wirkstoff mit einem unter einer Ansaugöffnung (71A, 112A) der Ablaufpumpe befindlichen Aussparungsteil (90), wobei die Einheit für einen antibakteriellen Wirkstoff mit einem Nutteil (91) um den Aussparungsteil versehen ist, antibakterieller Wirkstoff in den Nutteil eingefüllt ist, einem ersten Öffnungsteil (95), **durch** den Abwasser, das von der Ansaugöffnung der Ablasspumpe in den Aussparungsteil tropft, in den Nutteil eingebracht wird, und einem zweiten Öffnungsteil (96, 98), **durch** den das in den Nutteil eingebrachte Abwasser aus der Einheit für einen antibakteriellen Wirkstoff abgelassen wird.

2. Klimaanlage nach Anspruch 1, wobei der erste Öffnungsteil in einem Wandteil (94) des Nutteils, durch den der Nutteil und der Aussparungsteil abgeteilt sind, bereitgestellt ist und der zweite Öffnungsteil (96) in einem Deckelteil (82) zum Abdecken des Nutteils der Einheit für einen bakteriellen Wirkstoff bereitgestellt ist, wobei der antibakterielle Wirkstoff zwischen dem Wandteil und dem Deckelteil eingefüllt ist.

3. Klimaanlage nach Anspruch 1, wobei der erste Öffnungsteil in einem Wandteil (94) des Nutteils, durch den der Nutteil und der Aussparungsteil abgeteilt sind, bereitgestellt ist und der zweite Öffnungsteil (98) in einem äußeren peripheren Wandteil (97) der Einheit für einen antibakteriellen Wirkstoff bereitgestellt ist, wobei der antibakterielle Wirkstoff zwischen dem Wandteil und dem äußeren peripheren Wandteil eingefüllt ist.

4. Klimaanlage nach Anspruch 1, wobei die Ablaufwanne mit einem Durchgangsloch (74) , das sich unter der Ansaugöffnung der Ablaufpumpe befindet und durch das das Abwasser abgelassen wird, und einem Verschluss (75) versehen ist, der eingreifend in das Durchgangsloch eingepasst ist, wobei die Einheit für einen antibakteriellen Wirkstoff integral an einem Endteil des Verschlusses bereitgestellt ist.

5. Klimaanlage nach Anspruch 1, wobei die Ablaufwanne mit einem Durchgangsloch (74), das sich unter der Ansaugöffnung der Ablaufpumpe befindet und durch das das Abwasser abgelassen wird, und einem Verschluss (75) versehen ist, der eingreifend in das Durchgangsloch eingepasst ist, wobei die Einheit für einen antibakteriellen Wirkstoff separat an einem Endteil des Verschlusses bereitgestellt ist.

6. Klimaanlage nach Anspruch 5, wobei der Verschluss einen Griffteil (85), der in einer geraden Linie vorsteht, und einen Aussparungsteil (86), der derart gebildet ist, dass er den Griffteil umgibt, aufweist.

7. Klimaanlage nach Anspruch 1, wobei der antibakterielle Wirkstoff granularer antibakterieller Wirkstoff mit Silberionen ist.

8. Klimaanlage nach einem der vorgehenden Ansprüche, **gekennzeichnet durch** Umfassen von weiterhin einem Wasserstandsensor vom Elektrodentyp (130) mit Elektroden zum Steuern des Betriebs der Ablaufpumpe, wobei ein Metallkörper (150) mit einem vorbestimmten Metallion eine antibakterielle Wirkung aufweist und ein Teil des Stroms, der zwischen den Elektroden (131, 132, 133) **durch** das Abwasser fließt, zwischen jeder der Elektroden und dem Metallkörper zum Fließen gebracht wird, so dass das Metallion in das Abwasser eluiert wird.

9. Klimaanlage nach Anspruch 8, wobei der Wasserstandsensor (130) eine gemeinsame Elektrode (131) und eine Untergrenzerkennungselektrode (132) und eine Obergrenzerkennungselektrode (133), die derart angeordnet sind, dass sie der gemeinsamen Elektrode (131) gegenüberstehen, aufweist und der Metallkörper (150) unter der gemeinsamen Elektrode (131) und der Untergrenzerkennungselektrode (132) angeordnet ist.

10. Klimaanlage nach Anspruch 9, wobei der Metallkörper (150) derart angeordnet ist, dass der Abstand zwischen dem Metallkörper (150) und der Untergrenzerkennungselektrode (132) im Wesentlichen gleich zu dem Abstand zwischen der Untergrenzerkennungselektrode (132) und der gemeinsamen Elektrode (131) ist.

11. Klimaanlage nach Anspruch 8, wobei der Metallkörper (150) aus einem Material gebildet ist, aus dem Silberion, Zinkion oder Kupferion als das vorbestimmte Metallion eluiert wird.

## Revendications

1. Climatiseur ayant un échangeur de chaleur (5, 116), un bac de récupération (7, 122) pour recevoir l'eau de drainage générée dans l'échangeur de chaleur et une pompe de drainage (71, 112) pour pomper l'eau de drainage stockée dans le bac de récupération et décharger l'eau de drainage à l'extérieur du climatiseur, **caractérisé en ce qu'**il comprend en outre une unité d'agent antibactérien (110) ayant une partie d'évidement (90) positionnée au-dessous d'un orifice d'aspiration (71A, 112A) de la pompe de drainage, dans lequel l'unité d'agent antibactérien est prévue avec une partie de rainure (91) autour de la partie d'évidement, l'agent antibactérien étant versé dans la partie de rainure, une première partie d'ouverture (95) à travers laquelle l'eau de drainage tombant de l'orifice d'aspiration de la pompe de drainage dans la partie d'évidement est introduite dans la partie de rainure, et une seconde partie d'ouverture (96, 98) à travers laquelle l'eau de drainage introduite dans la partie de rainure est déchargée à l'extérieur de l'unité d'agent antibactérien.

2. Climatiseur selon la revendication 1, dans lequel la première partie d'ouverture est prévue sur une partie de paroi (94) de la partie de rainure par le biais de laquelle la partie de rainure et la partie d'évidement sont séparées, et la seconde partie d'ouverture (96) est prévue sur une partie de couvercle (82) pour recouvrir la partie de rainure de l'unité d'agent antibactérien, l'agent antibactérien étant versé entre la partie de paroi et la partie de couvercle.

3. Climatiseur selon la revendication 1, dans lequel la première partie d'ouverture est prévue sur une partie de paroi (94) de la partie de rainure par le biais de laquelle la partie de rainure et la partie d'évidement sont séparées, et la seconde partie d'ouverture (98) est prévue sur une partie de paroi périphérique externe (97) de l'unité d'agent antibactérien, l'agent antibactérien étant versé entre la partie de paroi et la partie de paroi périphérique externe.

4. Climatiseur selon la revendication 1, dans lequel le bac de récupération est prévu avec un trou débouchant (74) qui est positionné au-dessous de l'orifice d'aspiration de la pompe de drainage et à travers lequel l'eau de drainage est déchargée, et une butée (75) qui est montée par mise en prise dans le trou débouchant, l'unité d'agent antibactérien étant prévue de manière solidaire par rapport à une partie d'extrémité de la butée.

5. Climatiseur selon la revendication 1, dans lequel le bac de récupération est prévu avec un trou débouchant (74) qui est positionné au-dessous de l'orifice d'aspiration de la pompe de drainage et à travers lequel l'eau de drainage est déchargée, et une butée (75) qui est montée par mise en prise dans le trou débouchant, l'unité d'agent antibactérien étant prévue séparément par rapport à une partie d'extrémité de la butée.

6. Climatiseur selon la revendication 5, dans lequel la butée a une partie de préhension (85) s'étendant en ligne droite et une partie d'évidement (86) formée afin d'entourer la partie de préhension.

7. Climatiseur selon la revendication 1, dans lequel l'agent antibactérien est un agent antibactérien à base d'ions d'argent granulaire.

8. Climatiseur selon l'une quelconque des revendications précédentes, **caractérisé en ce qu'**il comprend en outre un capteur de niveau d'eau de type à électrode (130) ayant des électrodes pour contrôler le fonctionnement de la pompe de drainage, dans lequel un corps métallique (150) ayant une espèce d'ion métallique prédéterminée ayant une action antibactérienne, et une partie de courant s'écoulant entre les électrodes (131, 132, 133) par le biais de l'eau de drainage, est amené à s'écouler entre chacune des électrodes et le corps métallique de sorte que l'espèce d'ion métallique est éluée dans l'eau de drainage.

9. Climatiseur selon la revendication 8, dans lequel le capteur de niveau d'eau (130) a une électrode commune (131) et une électrode de détection de limité inférieure (132) et une électrode de détection de limite supérieure (133) qui sont disposées afin de faire face à l'électrode commune (131), et le corps métallique (150) est disposé au-dessous de l'électrode commune (131) et de l'électrode de détection de limite inférieure (132).

10. Climatiseur selon la revendication 9, dans lequel le corps métallique (150) est disposé de sorte que la distance entre le corps métallique (150) et l'électrode de détection de limite inférieure (132) est sensiblement égale à la distance entre l'électrode de détection de limite inférieure (132) et l'électrode commune (131).

11. Climatiseur selon la revendication 8, dans lequel le corps métallique (150) est formé avec un matériau à partir duquel l'un quelconque parmi l'ion d'argent, l'ion de zinc et l'ion de cuivre est élué en tant qu'espèce d'ion métallique prédéterminée.
